(19) Europäisches Patentamt
European Patent Office
Office européen des brevets

(11) EP 3 617 270 A1

(12) EUROPÄISCHE PATENTANMELDUNG

(43) Veröffentlichungstag:
**04.03.2020 Patentblatt 2020/10**

(51) Int Cl.:
***C08L 67/02*** *(2006.01)* ***B29C 64/00*** *(2017.01)*

(21) Anmeldenummer: **18191799.8**

(22) Anmeldetag: **30.08.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BASF SE**
**67056 Ludwigshafen am Rhein (DE)**

(72) Erfinder:
- **GABRIEL, Claus Dr.**
**67056 Ludwigshafen (DE)**
- **ZEPP, Angelika**
**67056 Ludwigshafen (DE)**
- **MEIER, Thomas**
**67056 Ludwigshafen (DE)**
- **HERLE, Natalie Beatrice Janine**
**67056 Ludwigshafen (DE)**

(74) Vertreter: **Baier, Martin**
**Ellwanger & Baier**
**Patentanwälte Partnerschaftsgesellschaft**
**Friedrichsplatz 9**
**68165 Mannheim (DE)**

(54) **SINTERPULVER (SP) ENTHALTEND EINEN TEILKRISTALLINEN TEREPHTHALAT-POLYESTER, EINEN AMORPHEN TEREPHTHALAT-POLYESTER UND EIN PHOSPHINSÄURESALZ**

(57) Die vorliegende Erfindung betrifft ein Sinterpulvers (SP), das mindestens einen teilkristallinen Terephthalat-Polyester (A), mindestens einen amorphen Terephthalat-Polyester (B) und mindestens ein Phosphinsäuresalz (C) enthält. Darüber hinaus betrifft die vorliegende Erfindung ein Verfahren zur Herstellung eines Formkörpers durch Sintern des Sinterpulvers (SP) oder durch ein FFF-Verfahren (Fused Filament Fabrication), einen Formkörper, der durch das erfindungsgemäße Verfahren erhältlich ist, sowie die Verwendung eines Phosphinsäuresalzes in einem Sinterpulver (SP) zur Verbreiterung des Sinterfensters ($W_{SP}$) des Sinterpulvers (SP).

EP 3 617 270 A1

## Beschreibung

Die vorliegende Erfindung betrifft ein Sinterpulvers (SP), das mindestens einen teilkristallinen Terephthalat-Polyester (A), mindestens einen amorphen Terephthalat-Polyester (B) und mindestens ein Phosphinsäuresalz (C) enthält. Darüber hinaus betrifft die vorliegende Erfindung ein Verfahren zur Herstellung eines Formkörpers durch Sintern des Sinterpulvers (SP) oder durch ein FFF-Verfahren (Fused Filament Fabrication), einen Formkörper, der durch das erfindungsgemäße Verfahren erhältlich ist, sowie die Verwendung eines Phosphinsäuresalzes in einem Sinterpulver (SP) zur Verbreiterung des Sinterfensters ($W_{SP}$) des Sinterpulvers (SP).

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Eine Weiterentwicklung des selektiven Lasersinterns ist das High-Speed Sintern (HSS) oder die sogenannte Multijet Fusion Technologie (MJF) von HP. Beim High-Speed Sintern wird durch Aufsprühen einer infrarotabsorbierenden Tinte auf den zu versinternden Bauteilquerschnitt und anschließendes Belichten mit einem Infrarotstrahler eine höhere Verarbeitungsgeschwindigkeit, verglichen mit dem selektiven Lasersintern, erzielt.

Von besonderer Bedeutung beim High-Speed Sintern bzw. der Multijet Fusion Technologie als auch beim selektiven Lasersintern ist das Sinterfenster des Sinterpulvers. Dieses sollte möglichst breit sein, um einen Verzug von Bauteilen beim Lasersintern zu reduzieren. Zudem ist die Rezyklierbarkeit des Sinterpulvers von besonderer Bedeutung. Aus diesem Grund ist insbesondere die Verarbeitung von teilkristallinen Terephthalat-Polyester basierten Sinterpulvern häufig schwierig, da teilkristalline Terephthalat-Polyester ein enges Sinterfenster aufweisen und sehr schnell kristallisieren, so dass häufig Bauteile mit einem starken Verzug erhalten werden.

Die US2010160547 beschreibt ein Verfahren zur Herstellung von Formkörpern durch selektives Lasersintern eines Sinterpulvers, das einen Terephthalat-Polyester enthält.

Nachteilig bei den im Stand der Technik beschriebenen Sinterpulvern zur Herstellung von Formkörpern durch selektives Lasersintern ist, dass das Sinterfenster der Sinterpulver häufig nicht ausreichend breit ist, so dass sich die Formkörper während der Herstellung durch selektives Lasersintern häufig verziehen. Durch diesen Verzug ist eine Verwendung oder Weiterverarbeitung der Formkörper nahezu ausgeschlossen. Der Verzug kann bereits während der Herstellung der Formkörper so stark sein, dass ein weiterer Schichtauftrag nicht möglich ist und daher der Herstellungsprozess abgebrochen werden muss.

Die der vorliegenden Erfindung zugrunde liegende Aufgabe besteht somit darin, ein Sinterpulver bereit zustellen, das in einem Verfahren zur Herstellung von Formkörpern durch Lasersintern die vorgenannten Nachteile der im Stand der Technik beschriebenen Sinterpulver und Verfahren nicht oder nur in geringem Maße aufweist. Das Sinterpulver und das Verfahren sollen möglichst einfach und kostengünstig herstellbar bzw. durchführbar sein.

Gelöst wird diese Aufgabe durch ein Sinterpulver (SP) enthaltend die Komponenten

(A) mindestens einen teilkristallinen Terephthalat-Polyester,

(B) mindestens einen amorphen Terephthalat-Polyester,

(C) mindestens ein Phosphinsäuresalz der allgemeinen Formel (I)

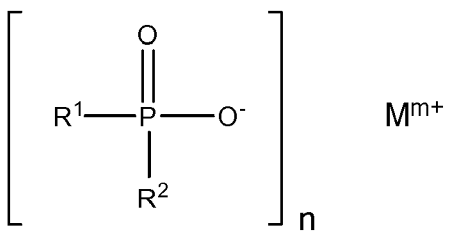 (I)

,

in der $R^1$ und $R^2$ unabhängig voneinander Wasserstoff oder $C_1$-$C_8$-Alkyl sind;

M ($C_1$-$C_4$-Alkyl)$_4$N, ($C_1$-$C_4$-Alkyl)$_3$NH, ($C_2$-$C_4$-AlkylOH)$_4$N, ($C_2$-$C_4$AlkylOH)$_3$NH, ($C_2$-$C_4$-AlkylOH)$_2$N($CH_3$)$_2$,

$(C_2\text{-}C_4\text{-AlkylOH})_2NHCH_3$, $(C_6H_5)_4N$, $(C_6H_5)NH$, $(C_6H_4CH_3)_4N$, $(C_6H_4CH_3)_3NH$, $NH_4$, ein Alkalimetallion, ein Erdalkalimetallion, ein Aluminiumion, ein Zinkion, ein Eisenion oder ein Borion ist;

m 1, 2 oder 3 ist und die Anzahl der positiven Ladungen von M angibt; und

n 1, 2, oder 3 ist und die Anzahl der Phosphinsäureanionen angibt.

Ein weiterer Gegenstand der vorliegenden Erfindung ist die Verwendung eines Sinterpulvers (SP) in einem Sinterverfahren oder in einem Fused Filament Fabrication-Verfahren.

Ein weiterer Gegenstand der vorliegenden Erfindung ist die Verwendung eines Phosphinsäuresalzes der allgemeinen Formel (I)

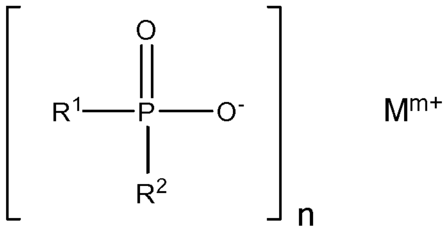 (I)

,

in der $R^1$ und $R^2$ unabhängig voneinander Wasserstoff oder $C_1$-$C_8$-Alkyl sind;

M $(C_1\text{-}C_4\text{-Alkyl})_4N$, $(C_1\text{-}C_4\text{-Alkyl})_3NH$, $(C_2\text{-}C_4\text{-AlkylOH})_4N$, $(C_2\text{-}C_4\text{AlkylOH})_3NH$, $(C_2\text{-}C_4\text{-AlkylOH})_2N(CH_3)_2$, $(C_2\text{-}C_4\text{-AlkylOH})_2NHCH_3$, $(C_6H_5)_4N$, $(C_6H_5)NH$, $(C_6H_4CH_3)_4N$, $(C_6H_4CH_3)_3NH$, $NH_4$, ein Alkalimetallion, ein Erdalkalimetallion, ein Aluminiumion, ein Zinkion, ein Eisenion oder ein Borion ist;

m 1, 2 oder 3 ist und die Anzahl der positiven Ladungen von M angibt; und

n 1, 2, oder 3 ist und die Anzahl der Phosphinsäureanionen angibt,

zur Verbreiterung des Sinterfensters ($W_{SP}$) eines Sinterpulvers (SP).

Es wurde überraschend gefunden, dass das erfindungsgemäße Sinterpulver (SP) ein so breitetes Sinterfenster ($W_{SP}$) aufweist, dass der durch Sintern des Sinterpulvers (SP) hergestellte Formkörper teilweise einen reduzierten Verzug aufweist. Zudem ist die Rezyklierbarkeit des im erfindungsgemäßen Verfahren eingesetzten Sinterpulvers (SP) auch nach thermischer Alterung teilweise hoch. Dies bedeutet, dass bei der Herstellung des Formkörpers nicht aufgeschmolzenes Sinterpulver (SP) in einigen Fällen wiederverwendet werden kann. Das Sinterpulver (SP) besitzt auch nach mehreren Lasersinterzyklen ähnlich vorteilhafte Sintereigenschaften wie beim ersten Sinterzyklus.

Sinterpulver (SP)

Erfindungsgemäß enthält das Sinterpulver (SP) als Komponente (A) mindestens einen teilkristallinen Terephthalat-Polyester, als Komponente (B) mindestens einen amorphen Terephthalat-Polyester und als Komponente (C) mindestens ein Phoshinsäuresalz der allgemeinen Formel (I).

Gegenstand der vorliegenden Erfindung ist somit auch ein Sinterpulver (SP), das im Bereich von 50 bis 90 Gew.-% der Komponente (A), im Bereich von 5 bis 25 Gew.-% der Komponente (B) und im Bereich von 5 bis 25 Gew.-% der Komponente (C) enthält, jeweils bezogen auf die Summe der Gewichtprozente (A), (B) und (C), bevorzugt bezogen auf das Gesamtgewicht des Sinterpulvers (SP).

Das Sinterpulver (SP) kann darüber hinaus, gegebenenfalls als Komponente (D) mindestens ein Additiv und gegebenenfalls als Komponente (E) mindestens ein Verstärkungsmittel enthalten.

Gegenstand der vorliegenden Erfindung ist daher auch ein Sinterpulver (SP), welches die Komponenten

(A) mindestens einen teilkristallinen Terephthalat-Polyester,
(B) mindestens einen amorphen Terephthalat-Polyester,
(C) mindestens ein Phoshinsäuresalz der allgemeinen Formel (I),
(D) gegebenenfalls mindestens ein Additiv und

(E) gegebenenfalls mindestens ein Verstärkungsmittel

enthält.

Im Rahmen der vorliegenden Erfindung werden die Begriffe "Komponente (A)" und "mindestens ein teilkristalliner Terephthalat-Polyester" synonym gebraucht und besitzen daher die gleiche Bedeutung.

Entsprechendes gilt für die Begriffe "Komponente (B)" und "mindestens ein amorpher Terephthalat-Polyester". Diese Begriffe werden im Rahmen der vorliegenden Erfindung ebenfalls synonym gebraucht und besitzen daher die gleiche Bedeutung.

Dementsprechend werden auch die Begriffe "Komponente (C)" und "mindestens ein Phoshinsäuresalz der allgemeinen Formel (I)", "Komponente (D)" und "mindestens ein Additiv" und "Komponente (E)" und "mindestens ein Verstärkungsmittel" im Rahmen der vorliegenden Erfindung jeweils synonym gebraucht und besitzen die gleiche Bedeutung.

Das Sinterpulver (SP) kann die Komponenten (A), (B) und (C) sowie gegebenenfalls (D) und (E) in beliebigen Mengen enthalten.

Beispielsweise enthält das Sinterpulver (SP) im Bereich von 50 bis 90 Gew.-% der Komponente (A), im Bereich von 5 bis 25 Gew.-% der Komponente (B), im Bereich von 5 bis 30 Gew.-% der Komponente (C), im Bereich von 0 bis 10 Gew.-% der Komponente (D) und im Bereich von 0 bis 40 Gew.-% der Komponente (E), jeweils bezogen auf die Summe der Gewichtsprozente der Komponenten (A), (B), (C) sowie gegebenenfalls (D) und (E), bevorzugt bezogen auf das Gesamtgewicht des Sinterpulvers (SP).

Bevorzugt enthält das Sinterpulver (SP) im Bereich von 55 bis 83,9 Gew.-% der Komponente (A), im Bereich von 8 bis 23 Gew.-% der Komponente (B), im Bereich von 8 bis 28 Gew.-% der Komponente (C), im Bereich von 0,1 bis 2,5 Gew.-% der Komponente (D) und im Bereich von 0 bis 28,9 Gew.-% der Komponente (E) jeweils bezogen auf die Summe der Gewichtsprozente der Komponenten (A), (B), (C), (D) sowie gegebenenfalls (E), bevorzugt bezogen auf das Gesamtgewicht des Sinterpulvers (SP).

Am meisten bevorzugt enthält das Sinterpulver (SP) im Bereich von 60 bis 79,9 Gew.-% der Komponente (A), im Bereich von 10 bis 20 Gew.-% der Komponente (B), im Bereich von 10 bis 25 Gew.-% der Komponente (C), im Bereich von 0,1 bis 2 Gew.-% der Komponente (D) und im Bereich von 0 bis 19,9 Gew.-% der Komponente (E), jeweils bezogen auf die Summe der Gewichtsprozente der Komponenten (A), (B), (C), (D) sowie gegebenenfalls (E), bevorzugt bezogen auf das Gesamtgewicht des Sinterpulvers (SP).

Die Gewichtsprozente der Komponenten (A), (B) und (C) sowie gegebenenfalls der Komponente (D) und (E) addieren sich üblicherweise zu 100 Gew.-%.

Das Sinterpulver (SP) weist Partikel auf. Diese Partikel haben beispielsweise eine Größe ($D_{50}$-Wert) im Bereich von 10 bis 250 μm, bevorzugt im Bereich von 15 bis 200 μm, besonders bevorzugt im Bereich von 20 bis 120 μm und insbesondere bevorzugt im Bereich von 20 bis 110 μm.

Das erfindungsgemäße Sinterpulver (SP) weist beispielsweise

einen D10-Wert im Bereich von 10 bis 60 μm,
einen D50-Wert im Bereich von 25 bis 90 μm und
einen D90-Wert im Bereich von 50 bis 150 μm auf.

Bevorzugt weist das erfindungsgemäße Sinterpulver (SP)

einen D10-Wert im Bereich von 20 bis 50 μm,
einen D50-Wert im Bereich von 40 bis 80 μm und
einen D90-Wert im Bereich von 80 bis 125 μm auf.

Gegenstand der vorliegenden Erfindung ist daher auch ein Sinterpulver (SP), dadurch gekennzeichnet, dass das Sinterpulver eine mittlere Partikelgröße (D50-Wert) im Bereich von 10 bis 250 μm aufweist.

Gegenstand der vorliegenden Erfindung ist daher auch ein Sinterpulver (SP), dadurch gekennzeichnet, dass das Sinterpulver (SP)

einen D10-Wert im Bereich von 10 bis 60 μm,
einen D50-Wert im Bereich von 25 bis 90 μm und
einen D90-Wert im Bereich von 50 bis 150 μm

aufweist.

Unter dem "D10-Wert" wird im Rahmen der vorliegenden Erfindung die Partikelgröße verstanden, bei der 10 Vol.-% der Partikel bezogen auf das Gesamtvolumen der Partikel kleiner oder gleich dem D10-Wert sind und 90 Vol.-

% der Partikel bezogen auf das Gesamtvolumen der Partikel größer als der D10-Wert sind. In Analogie dazu wird unter dem "D50-Wert" die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind. Entsprechend wird unter dem "D90-Wert" die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Zur Ermittlung der Partikelgrößen wird das Sinterpulver (SP) trocken mittels Druckluft oder in einem Lösungsmittel, wie beispielsweise Wasser oder Ethanol, suspendiert und diese Suspension vermessen. Die Bestimmung des D10-, D50- und D90-Wertes erfolgt mittels Laserbeugung unter Verwendung eines Master Sizers 3000 der Firma Malvern. Die Auswertung erfolgt mittels Fraunhofer-Beugung.

Das Sinterpulver (SP) weist üblicherweise eine Schmelztemperatur ($T_M$) im Bereich von 150 bis 260 °C auf. Bevorzugt liegt die Schmelztemperatur ($T_M$) des Sinterpulvers (SP) im Bereich von 160 bis 250°C und insbesondere bevorzugt im Bereich von 170 bis 240°C.

Die Schmelztemperatur ($T_M$) wird im Rahmen der vorliegenden Erfindung bestimmt mittels dynamischer Differenzkalorimetrie (DDK; Differential Scanning Calorimetry, DSC). Es werden üblicherweise ein Heizlauf (H) und ein Kühllauf (K), jeweils mit einer Heizrate bzw. Kühlrate von 20 K/min, gemessen. Dabei wird ein DSC-Diagramm, wie es in Figur 1 beispielhaft gezeigt ist, erhalten. Unter der Schmelztemperatur ($T_M$) wird dann die Temperatur verstanden, bei der der Aufschmelzpeak des Heizlaufs (H) des DSC-Diagramms ein Maximum aufweist.

Das Sinterpulver (SP) weist außerdem üblicherweise eine Kristallisationstemperatur ($T_C$) im Bereich von 110 bis 210°C auf. Bevorzugt liegt die Kristallisationstemperatur ($T_C$) des Sinterpulvers (SP) im Bereich von 120 bis 200 °C und insbesondere bevorzugt im Bereich von 130 bis 195 °C.

Die Kristallisationstemperatur ($T_C$) wird im Rahmen der vorliegenden Erfindung mittels dynamischer Differenzkalorimetrie (DDK; Differential Scanning Calorimetry, DSC) bestimmt. Dabei werden üblicherweise ein Heizlauf (H) und ein Kühllauf (K), jeweils mit einer Heizrate und einer Kühlrate von 20 K/min, gemessen. Dabei wird ein DSC-Diagramm, wie es in der Figur 1 beispielhaft gezeigt ist, erhalten. Die Kristallisationstemperatur ($T_C$) ist dann die Temperatur am Minimum des Kristallisationspeaks der DSC-Kurve.

Das Sinterpulver (SP) weist außerdem üblicherweise ein Sinterfenster ($W_{SP}$) auf. Das Sinterfenster ($W_{SP}$) ist, wie nachfolgend beschrieben, die Differenz zwischen der Onset-Temperatur des Aufschmelzens ($T_M^{onset}$) und der Onset-Temperatur der Kristallisation ($T_C^{onset}$). Die Onset-Temperatur des Aufschmelzens ($T_M^{onset}$) und die Onset-Temperatur der Kristallisation ($T_C^{onset}$) werden wie nachfolgend zu Schritt ii) beschrieben bestimmt.

Das Sinterfenster ($W_{SP}$) des Sinterpulvers (SP) liegt beispielsweise im Bereich von 10 bis 40 K (Kelvin), besonders bevorzugt im Bereich von 15 bis 35 K und insbesondere bevorzugt im Bereich von 18 bis 33 K.

Das Sinterpulver (SP) kann nach allen dem Fachmann bekannten Methoden hergestellt werden. Beispielsweise wird das Sinterpulver durch Vermahlen, durch Fällung oder durch Mikrogranulierung hergestellt.

Wird das Sinterpulver (SP) durch Fällung hergestellt, so werden üblicherweise die Komponenten (A), (B), (C) sowie gegebenenfalls (D) und (E) mit einem Lösungsmittel gemischt und die Komponenten (A) und (B) gegebenenfalls unter Erwärmen in dem Lösungsmittel unter Erhalt einer Lösung gelöst. Die Fällung des Sinterpulvers (SP) erfolgt anschließend beispielsweise dadurch, dass die Lösung abgekühlt wird, das Lösungsmittel aus der Lösung abdestilliert wird oder ein Fällungsmittel zu der Lösung gegeben wird.

Das Vermahlen kann nach allen dem Fachmann bekannten Methoden durchgeführt werden, beispielsweise werden die Komponenten (A), (B) und (C) sowie gegebenenfalls (D) und (E) in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen wie Stiftmühlen und Wirbelstrommühlen.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt. Die Temperatur bei der Mahlung ist beliebig, bevorzugt wird die Mahlung bei Temperaturen von flüssigem Stickstoff durchgeführt, beispielsweise bei einer Temperatur im Bereich von -210 bis -195 °C. Die Temperatur der Komponenten beim Vermahlen liegt dann beispielsweise im Bereich von -40 bis -30°C.

Bevorzugt werden zunächst die Komponenten miteinander gemischt und anschließend gemahlen. Das Verfahren zur Herstellung des Sinterpulvers (SP) umfasst dann vorzugsweise die Schritte

a) Mischen der Komponenten

(A) mindestens ein teilkristalliner Terephthalat-Polyester,
(B) mindestens ein amorpher Terephthalat-Polyester,
(C) mindestens ein Phoshinsäuresalz der allgemeinen Formel (I),
(D) gegebenenfalls mindestens ein Additiv und
(E) gegebenenfalls mindestens ein Verstärkungsmittel,

b) Mahlen der in Schritt a) erhaltenen Mischung unter Erhalt des Sinterpulvers (SP).

Gegenstand der vorliegenden Erfindung ist daher auch ein Verfahren zur Herstellung eines Sinterpulvers (SP) umfassend die Schritte

a) Mischen der Komponenten

(A) mindestens ein teilkristalliner Terephthalat-Polyester,

(B) mindestens ein amorpher Terephthalat-Polyester,

(C) mindestens ein Phosphinsäuresalz der allgemeinen Formel (I)

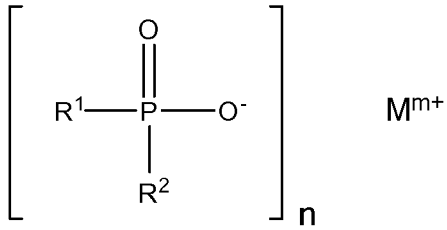

(I)

,

in der $R^1$ und $R^2$ unabhängig voneinander Wasserstoff oder $C_1$-$C_8$-Alkyl sind;

M ($C_1$-$C_4$-Alkyl)$_4$N, ($C_1$-$C_4$-Alkyl)$_3$NH, ($C_2$-$C_4$-AlkylOH)$_4$N, ($C_2$-$C_4$AlkylOH)$_3$NH, ($C_2$-$C_4$-AlkylOH)$_2$N($CH_3$)$_2$, ($C_2$-$C_4$-AlkylOH)$_2$NHCH$_3$, ($C_6H_5$)$_4$N, ($C_6H_5$)NH, ($C_6H_4CH_3$)$_4$N, ($C_6H_4CH_3$)$_3$NH, $NH_4$, ein Alkalimetallion, ein Erdalkalimetallion, ein Aluminiumion, ein Zinkion, ein Eisenion oder ein Borion ist;

m 1, 2 oder 3 ist und die Anzahl der positiven Ladungen von M angibt; und

n 1, 2, oder 3 ist und die Anzahl der Phosphinsäureanionen angibt; und

b) Mahlen der in Schritt a) erhaltenen Mischung unter Erhalt des Sinterpulvers (SP).

In einer bevorzugten Ausführungsform umfasst das Verfahren zur Herstellung des Sinterpulvers (SP) die folgenden Schritte:

ai) Mischen der Komponenten

(A) mindestens ein teilkristalliner Terephthalat-Polyester,
(B) mindestens ein amorpher Terephthalat-Polyester,
(C) mindestens ein Phoshinsäuresalz der allgemeinen Formel (I),
(D) gegebenenfalls mindestens ein Additiv und
(E) gegebenenfalls mindestens ein Verstärkungsmittel,

bi) Mahlen der in Schritt ai) erhaltenen Mischung unter Erhalt eines Terephthalat-Polyesterpulvers,

bii) Mischen des in Schritt bi) erhaltenen Terephthalat-Polyesterpulvers mit einer Rieselhilfe unter Erhalt des Sinterpulvers (SP).

Geeignete Rieselhilfen sind beispielsweise Kieselsäuren oder Aluminiumoxide. Ein geeignetes Aluminiumoxid ist beispielsweise Aeroxide® Alu C der Firma Evonik.

Für den Fall, dass das Sinterpulver (SP) eine Rieselhilfe enthält, wird diese bevorzugt in Verfahrensschritt bii) zugegeben. Das Sinterpulver (SP) enthält in einer Ausführungsform 0,02 bis 1 Gew.-%, bevorzugt 0,05 bis 0,8 Gew.-% und besonders bevorzugt 0,1 bis 0,6 Gew.-% Rieselhilfe, jeweils bezogen auf das Gesamtgewicht des Sinterpulvers (SP) und der Rieselhilfe.

Verfahren zur Compoundierung (zum Mischen) in Schritt a) sind dem Fachmann als solche bekannt. Beispielsweise kann das Mischen in einem Extruder erfolgen, insbesondere bevorzugt in einem Doppelschneckenextruder.

Für das Mahlen in Schritt b) gelten die zuvor beschriebenen Ausführungen und Bevorzugungen im Hinblick auf das Mahlen entsprechend.

Ein weiterer Gegenstand der vorliegenden Erfindung ist daher auch das Sinterpulver (SP), erhältlich nach dem erfindungsgemäßen Verfahren.

Komponente (A)

Erfindungsgemäß ist die Komponente (A) mindestens ein teilkristalliner Terephthalat-Polyester.

"Mindestens ein teilkristalliner Terephthalat-Polyester (A)" bedeutet im Rahmen der vorliegenden Erfindung sowohl genau ein teilkristalliner Terephthalat-Polyester (A) als auch eine Mischung aus zwei oder mehreren teilkristallinen Terephthalat-Polyestern (A).

"Teilkristallin" bedeutet im Rahmen der vorliegenden Erfindung, dass der teilkristalline Terephthalat-Polyester (A) eine Schmelzenthalpie $\Delta H2_{(A)}$ von größer als 20 J/g, bevorzugt von größer als 25 J/g und insbesondere bevorzugt von größer als 30 J/g aufweist, jeweils gemessen mittels dynamischer Differenzkalorimetrie (differential scanning calorimetry; DSC) gemäß ISO 11357-4:2014.

Der erfindungsgemäße mindestens eine teilkristalline Terephthalat-Polyester (A) weist also üblicherweise eine Schmelzenthalpie $\Delta H2_{(A)}$ von größer als 20 J/g, bevorzugt von größer als 25 J/g und insbesondere bevorzugt von größer als 30 J/g auf, jeweils gemessen mittels dynamischer Differenzkalorimetrie (differential scanning calorimetry; DSC) gemäß ISO 11357-4:2014.

Der erfindungsgemäße mindestens eine teilkristalline Terephthalat-Polyester (A) weist üblicherweise eine Schmelzenthalpie $\Delta H2_{(A)}$ von weniger als 200 J/g, bevorzugt von weniger als 150 J/g und insbesondere bevorzugt von weniger als 100 J/g auf, jeweils gemessen mittels dynamischer Differenzkalorimetrie (differential scanning calorimetry; DSC) gemäß ISO 11357-4:2014.

Geeignete teilkristalline Terephthalat-Polyester (A) weisen im Allgemeinen eine Viskositätszahl (VZ(A)) im Bereich von 50 bis 220 ml/g, vorzugsweise im Bereich von 80 bis 210 ml/g und insbesondere bevorzugt im Bereich von 90 bis 200 ml/g auf, bestimmt in einer 0,5 Gew.-%igen Lösung in einem Phenol/o-Dichlorbenzolgemisch (Gew.-Verhältnis 1:1 bei 25 °C) gemäß ISO 1628.

Die erfindungsgemäße Komponente (A) weist üblicherweise eine Schmelztemperatur ($T_{M(A)}$) auf. Bevorzugt liegt die Schmelztemperatur ($T_{M(A)}$) der Komponente (A) im Bereich von 160 bis 280 °C, besonders bevorzugt im Bereich von 170 bis 270 °C und insbesondere bevorzugt im Bereich von 175 bis 265 °C, bestimmt nach ISO 11357-3:2014.

Geeignete Komponenten (A) weisen ein gewichtsmittleres Molekulargewicht ($M_{W(A)}$) im Bereich von 500 bis 2 000 000 g/mol auf, bevorzugt im Bereich von 10 000 bis 90 000 g/mol und insbesondere bevorzugt im Bereich von 20 000 bis 70 000 g/mol. Das gewichtsmittlere Molekulargewicht ($M_{W(A)}$) wird bestimmt mittels SEC-MALLS (Size Exclusion Chromatography-Multi-Angle Laser Light Scattering) nach Chi-san Wu "Handbook of size exclusion chromatography and related techniques", Seite 19.

Beispiele für teilkristalline Terephthalat-Polyester (A) sind Polyethylenterephthalat (PET), Polytrimethylenterephthalat (PTT) oder Polybutylenterephthalat (PBT).

Der teilkristalline Terephthalat-Polyester (A) kann nach allen dem Fachmann bekannten Methoden hergestellt werden.

In einer bevorzugten Ausführungsform wird der teilkristalline Terephthalat-Polyester (A) hergestellt durch Polykondensation von mindestens einem Diol (m1) und mindestens einem Terephthalsäure(-Derivat). "Mindestens ein Terephthalsäure(-Derivat)" bedeutet erfindungsgemäß genau ein Terephthalsäure(-Derivat) sowie Mischungen aus zwei oder mehr Terephthalsäure(-Derivate). "Mindestens ein Diol (m1)" bedeutet erfindungsgemäß genau ein Diol (m1) sowie Mischungen aus zwei oder mehr Diolen (m1).

Unter Terephthalsäure(-Derivate)n werden im Rahmen der vorliegenden Erfindung die Terephthalsäure selbst sowie Derivate der Terephthalsäure, wie Terephthalsäureester, verstanden. Als Terephthalsäureester kommen dabei die Di-$C_1$-$C_6$-Alkylester der Terephthalsäure, zum Beispiel die Dimethyl-, Diethyl-, Di-n-propyl-, Di-iso-propyl-, Di-n-butyl-, Di-iso-butyl-, Di-t-butyl-, Di-n-pentyl-, Di-iso-pentyl- oder Di-n-hexylester der Terephthalsäure, in Betracht.

Die Terephthalsäure oder deren Derivate können einzeln oder als Gemisch aus zwei und mehr davon eingesetzt werden. Besonders bevorzugt wird Terephthalsäure oder Dimethylterephthalat verwendet. Bevorzugt sind teilkristalline Terephthalat-Polyester (A), zu deren Herstellung mindestens 90 mol-%, bevorzugt mindestens 95 mol-% Terephthalsäure eingesetzt werden, jeweils bezogen auf das Gesamtgewicht der eingesetzten Terephthalsäure(-Derivat).

Bei der Komponente (m1) handelt es sich bevorzugt um mindestens ein aliphatisches 1, ω-Diol.

Beispiele für aliphatische 1, ω-Diole (m1) sind Ethylenglycol (1,2-Ethandiol), 1,3-Propandiol, 1,4-Butandiol, 1,5-Pentandiol oder 1,6-Hexandiol.

Im Rahmen der vorliegenden Erfindung ist das aliphatische 1, ω-Diol (m1) vorzugsweise ein aliphatisches 1, ω-Diol mit 2 bis 12, bevorzugt mit 4 bis 6, Kohlenstoffatomen. Das aliphatische 1, ω-Diol (m1) kann dabei linear oder

verzweigt sein.

Besonders bevorzugte aliphatische 1, ω-Diole m1) sind Ethylenglycol, 1,3-Propandiol oder 1,4-Butandiol, ganz besonders bevorzugt ist 1,4-Butandiol.

Bevorzugt sind teilkristalline Terephthalat-Polyester (A), zu deren Herstellung mindestens 90 mol-%, bevorzugt mindestens 95 mol-% 1,4-Butandiol eingesetzt werden, jeweils bezogen auf das Gesamtgewicht der Diole (m1).

Polyethylenterephthalat (PET) wird beispielsweise aus Terephthalsäure und Ethylenglycol hergestellt, Polybutylenterephthalat (PBT) aus Terephthalsäure und 1,4-Butandiol. Beispiele für kommerziell erhältliche Polybutylenterephthalate (PBT) sind Ultradur B 4500®, Ultradur B 4520® und Ultradur B 2550 FC® des Herstellers BASF SE in Ludwigshafen.

Vorzugsweise ist der mindestens eine teilkristalline Terephthalat-Polyester (A) ein Polyethylenterephthalat (PET) und/oder Polybutylenterephthalat (PBT), insbesondere bevorzugt ist der mindestens eine teilkristalline Terephthalat-Polyester (A) ein Polybutylenterephthalat (PBT).

Gegenstand der vorliegenden Erfindung ist somit auch ein Verfahren zur Herstellung von Polyesterfasern (PF), bei dem der mindestens eine teilkristalline Terephthalat-Polyester (A) Polyethylenterephthalat (PET) und/oder Polybutylenterephthalat (PBT) ist.

Das als teilkristalliner Terephthalat-Polyester (A) erfindungsgemäß insbesondere bevorzugte Polybutylenterephthalat (PBT) weist im Allgemeinen eine Schmelztemperatur ($T_M$) auf, die im Bereich von 180 bis 250 °C, bevorzugt im Bereich von 210 bis 240 °C liegt, bestimmt durch dynamische Differenzkalorimetrie (Differential Scanning Calorimetry; DSC) bei einer Heiz- und Kühlrate von 10 °C/min.

Das als teilkristalliner Terephthalat-Polyester (A) erfindungsgemäß bevorzugte Polyethylenterephthalat (PET) weist im Allgemeinen eine Schmelztemperatur ($T_M$) im Bereich von 220 bis 280 °C, bevorzugt im Bereich von 230 bis 270 °C auf, bestimmt durch dynamische Differenzkalorimetrie (Differential Scanning Calorimetry; DSC) bei einer Heiz- und Kühlrate von 10 °C/min.

Komponente (B)

Erfindungsgemäß ist die Komponente (B) mindestens ein amorpher Terephthalat-Polyester.

"Mindestens ein amorpher Terephthalat-Polyester (B)" bedeutet im Rahmen der vorliegenden Erfindung sowohl genau einen amorphen Terephthalat-Polyester (B) als auch eine Mischung aus zwei oder mehreren amorphen Terephthalat-Polyestern (B).

"Amorph" im Rahmen der vorliegenden Erfindung bedeutet in einer Ausführungsform, dass der amorphe Terephthalat-Polyester (B) im Allgemeinen maximal 2,5 Gew.-%, bevorzugt maximal 1,5 Gew.-%, besonders bevorzugt maximal 1,0 Gew.-%, noch mehr bevorzugt maximal 0,5 Gew.-%, insbesondere bevorzugt maximal 0,1 Gew.-% und am meisten bevorzugt maximal 0,01 Gew.-% kristallinen Terephthalat-Polyester enthält, jeweils bezogen auf das Gesamtgewicht des amorphen Terephthalat-Polyesters (B). In einer weiteren insbesondere bevorzugten Ausführungsform enthält der amorphe Terephthalat-Polyester (B) keinen kristallinen Terephthalat-Polyester.

"Amorph" im Rahmen der vorliegenden Erfindung bedeutet in einer weiteren Ausführungsform, dass der Terephthalat-Polyester (B) im Allgemeinen mindestens 97,5 Gew.-%, bevorzugt mindestens 98,5 Gew.-%, besonders bevorzugt mindestens 99 Gew.-%, noch mehr bevorzugt mindestens 99,5 Gew.-%, insbesondere bevorzugt mindestens 99,9 Gew.-% und am meisten bevorzugt mindestens 99,99 Gew.-% glasartig erstarrten Terephthalat-Polyester enthält, der keine Ordnung der Polymerketten, wie zum Beispiel Kristallite oder Überstrukturen, aufweist, die röntgengrafisch nachweisbar sind, jeweils bezogen auf das Gesamtgewicht des Terephthalat-Polyesters (B). In einer weiteren insbesondere bevorzugten Ausführungsform besteht der Terephthalat-Polyester (B) aus Terephthalat-Polyester, der einen glasartig erstarrten Zustand aufweist, in dem keine Ordnung der Polymerketten, wie zum Beispiel Kristallite oder Überstrukturen, röntgengrafisch nachweisbar sind.

In einer weiteren insbesondere bevorzugten Ausführungsform weist der mindestens eine amorphe Terephthalat-Polyester (B) bei der dynamischen Differenzkalorimetrie (differential scanning calorimetry; DSC) gemessen gemäß ISO 11357 keinen Schmelzpunkt auf.

Der mindestens eine amorphe Terephthalat-Polyester (B) weist im Allgemeinen eine Glasübergangstemperatur ($T_G$) auf. Die Glasübergangstemperatur ($T_G$) der Komponente (B) liegt im Allgemeinen im Bereich von 0 bis 200 °C, bevorzugt im Bereich von 25 bis 180 °C und insbesondere bevorzugt im Bereich von 5 bis 150 °C.

Die Bestimmung der Glasübergangstemperatur ($T_G$) des amorphen Terephthalat-Polyesters (B) erfolgt mittels dynamischer Differenzkalorimetrie. Zur Bestimmung der Glasübergangstemperatur ($T_G$) des amorphen Terephthalat-Polyesters (B) werden erfindungsgemäß zunächst ein erster Heizlauf (H1), dann ein Kühllauf (K) und anschließend ein zweiter Heizlauf (H2) einer Probe des amorphen Terephthalat-Polyesters (B) (Einwaage 8,5 g) gemessen. Die Heizrate beim ersten Heizlauf (H1) und beim zweiten Heizlauf (H2) beträgt 20 K/min, die Kühlrate beim Kühllauf (K) beträgt ebenfalls 20 K/min. Im Bereich des Glasübergangs des amorphen Terephthalat-Polyesters (B) wird im zweiten Heizlauf (H2) des DSC-Diagramms eine Stufe erhalten. Die Glasübergangstemperatur des amorphen Terephthalat-Polyesters

(B) entspricht der Temperatur bei halber Stufenhöhe im DSC-Diagramm. Dieses Verfahren zur Bestimmung der Glasübergangstemperatur ist dem Fachmann bekannt.

Geeignete Komponenten (B) weisen im Allgemeinen ein gewichtsmittleres Molekulargewicht ($M_{W(B)}$) im Bereich von 5000 bis 500 000 g/Mol auf. Das gewichtsmittlere Molekulargewicht ($M_{W(B)}$) wird bestimmt mittels SEC-MALLS (size exclusion chromatography multi-angle laserlight scattering) nach Chi-sanwu "Handbook of size exclusion chromatography and related techniques", Seite 19.

Geeignete amorphe Terephthalat-Polyester (B) weisen im Allgemeinen eine Viskositätszahl (VZ(B)) im Bereich von 50 bis 300 ml/g, vorzugsweise im Bereich von 75 bis 250 ml/g und insbesondere bevorzugt im Bereich von 100 bis 225 ml/g auf, bestimmt in einer 0,5 gew.-%igen Lösung in einem Phenol/o-Dichlorbenzol-Gemisch (Gewichtsverhältnis 1:1 bei 25 °C) gemäß ISO 1628.

In einer bevorzugten Ausführungsform wird der amorphe Terephthalat-Polyester (B) hergestellt durch Polykondensation von mindestens einem Diol (m1), mindestens einem Terephthalatsäure(-Derivat) sowie mindestens einem zweiten Diol (m2) und/oder mindestens einem zweiten Terephthalsäure(-Derivat), wobei für das mindestens eine Diol (m1) und das mindestens eine Terephthalatsäure(-Derivat) die vorstehenden Ausführungen und Bevorzugungen zur Komponente (A) entsprechend gelten,

Das zweite Diol (m2) ist von dem Diol (m1) verschieden. Das zweite Terephthalatsäure(-Derivat) ist von dem Terephthalatsäure(-Derivat) verschieden, das zur Herstellung der Komponente (A) eingesetzt wird. Bei der Komponente (m2), die zur Herstellung der Komponente (B) eingesetzt wird, handelt es sich bevorzugt ebenfalls um ein 1,ω-Diol. Geeignete Komponenten (m2) sind beispielsweise ausgewählt aus der Gruppe bestehend aus 2,2-Dimethyl-1,3-Propandiol, 2-Ethyl-2-Butyl-1,3-Propandiol, 2-Ethyl-2-Isobutyl-1,3-Propandiol, 1,4-Cyclohexan-dimethanol 2,2,4-Trimethyl-1,6-Hexandiol, Diethylenglycol, Triethylenglycol und Tetraethylenglycol. Bevorzugt ist die Komponente (m2) ausgewählt aus der Gruppe bestehend aus Diethylenglycol, Triethylenglycol und 1,4-Cyclohexan-Dimethanol. Besonders bevorzugt ist die Komponente (m2) ausgewählt aus der Gruppe bestehend aus Diethylenglycol und 1,4-Cyclohexan-Dimethanol.

Geeignete zweite Terephthalatsäure(-Derivate), die zur Herstellung des amorphen Terephthalat-Polyesters (B) eingesetzt werden können, sind beispielsweise Isophthalsäure(-Derivate). Unter Isophthalsäure(-Derivaten) werden im Rahmen der vorliegenden Erfindung die Isophthalsäure selbst sowie Derivate der Isophthalsäure, wie Isophthalsäureester, verstanden. Als Isophthalsäureester kommen dabei die Di-$C_1$-$C_6$-Alkylester der Isophthalsäure, zum Beispiel die Dimethyl-, Diethyl-, Di-n-propyl-, Di-iso-propyl-, Di-n-butyl-, Di-iso-butyl-, Di-t-butyl-, Di-n-pentyl-, Di-iso-pentyl- oder Di-n-hexylester der Isophthalsäure, in Betracht.

Bevorzugt sind amorphe Terephthalat-Polyester (B), zu deren Herstellung als Komponente (m1) Ethylenglycol, 1,3-Propandiol oder 1,4-Butandiol eingesetzt wird. Besonders bevorzugt sind amorphe Terephthalat-Polyester (B), zu deren Herstellung Ethylenglycol (1,2-Ethandiol) eingesetzt wird. Insbesondere bevorzugt sind amorphe Terephthalat-Polyester (B), zu deren Herstellung 0,1 bis 99,9 Gew.-%, mehr bevorzugt 0,1 bis 50 Gew.-%, des zweiten Diols (m2) eingesetzt werden, bezogen auf das Gesamtgewicht der zur Herstellung eingesetzten Komponenten (m1) und (m2).

<u>Komponente (C)</u>

Erfindungsgemäß ist die Komponente (C) mindestens ein Phoshinsäuresalz der allgemeinen Formel (I).

"Mindestens ein Phoshinsäuresalz der allgemeinen Formel (I)" bedeutet im Rahmen der vorliegenden Erfindung sowohl genau ein Phoshinsäuresalz der allgemeinen Formel (I) als auch eine Mischung aus zwei oder mehreren Phoshinsäuresalzen der allgemeinen Formel (I).

In der allgemeinen Formel (I) ist m 1, 2 oder 3 und gibt die Anzahl der positiven Ladungen von M an. In der allgemeinen Formel (I) ist n 1, 2, oder 3 und gibt Anzahl der Phosphinsäureanionen an, die im Phospinsäuresalz enthalten sind. m und n können gleiche oder unterschiedliche Werte haben. Wenn m und n unterschiedliche Werte haben, ist das Phosphinsäuresalz positiv oder negativ geladen. Bevorzugt haben m und n den gleichen Wert, so dass das Salz neutral ist.

In einer bevorzugten Ausführungsform wird als Komponente (C) ein Phoshinsäuresalz der Formel (I')

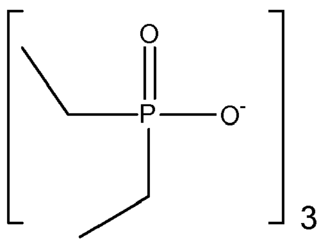

$Al^{3+}$ ( I' )

eingesetzt.

Gegenstand der vorliegenden Erfindung ist somit auch ein Sinterpulver (SP), dadurch gekennzeichnet, dass

die Komponente (C) ein Phosphinsäuresalz der Formel (I')

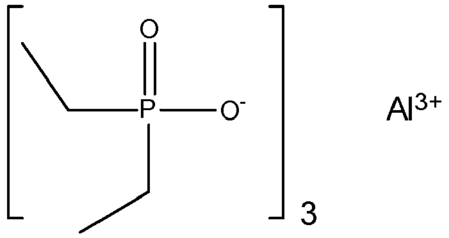

(I')

ist.

Komponente (D)

Die Komponente (D) ist mindestens ein Additiv.

"Mindestens ein Additiv" bedeutet im Rahmen der vorliegenden Erfindung sowohl genau ein Additiv als auch eine Mischung aus zwei oder mehreren Additiven.

Additive als solche sind dem Fachmann bekannt. Beispielsweise ist das mindestens eine Additiv ausgewählt aus der Gruppe bestehend aus Antinukleierungsmitteln, Stabilisatoren, leitfähigen Additiven, Endgruppenfunktionalisierern, Farbstoffen, Antioxidationsmitteln (bevorzugt sterisch gehinderte Phenole) und Farbpigmenten.

Gegenstand der vorliegenden Erfindung ist daher auch ein Verfahren, bei dem die Komponente (D) ausgewählt ist aus der Gruppe bestehend aus Antinukleierungsmitteln, Stabilisatoren, leitfähigen Additiven, Endgruppenfunktionalisierern, Farbstoffen, Antioxidationsmitteln (bevorzugt sterisch gehinderte Phenole) und Farbpigmenten.

Ein geeignetes Antinukleierungsmittel ist beispielsweise Lithiumchlorid. Geeignete Stabilisatoren sind beispielsweise Phenole, Phosphite und Kupferstabilisatoren. Geeignete leitfähige Additive sind Kohlenstofffasern, Metalle, Edelstahlfasern, Carbonnanotubes und Ruß. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide.

Ein geeignetes Antioxidationsmittel ist beispielsweise Irganox® 245 der BASF SE.

Enthält das Sinterpulver die Komponente (D), so enthält es mindestens 0,1 Gew.-% der Komponente (D), bevorzugt mindestens 0,2 Gew.-% der Komponente (D), bezogen auf die Summe der Gewichtsprozente der Komponenten (A), (B), (C), (D) und (E), bevorzugt bezogen auf das Gesamtgewicht des Sinterpulvers (SP).

Komponente (E)

Erfindungsgemäß ist die gegebenenfalls enthaltene Komponente (E) mindestens ein Verstärkungsmittel.

"Mindestens ein Verstärkungsmittel" bedeutet im Rahmen der vorliegenden Erfindung sowohl genau ein Verstärkungsmittel als auch eine Mischung aus zwei oder mehreren Verstärkungsmitteln.

Unter einem Verstärkungsmittel wird im Rahmen der vorliegenden Erfindung ein Material verstanden, das die mechanischen Eigenschaften von mit dem erfindungsgemäßen Verfahren hergestellten Formkörpern verbessert gegenüber Formkörpern, die das Verstärkungsmittel nicht enthalten.

Verstärkungsmittel als solche sind dem Fachmann bekannt. Die Komponente (E) kann beispielsweise kugelförmig, plättchenförmig oder faserförmig sein.

Bevorzugt ist das mindestens eine Verstärkungsmittel plättchenförmig oder faserförmig.

Unter einem "faserförmigen Verstärkungsmittel" wird ein Verstärkungsmittel verstanden, bei dem das Verhältnis von Länge des faserförmigen Verstärkungsmittels zum Durchmesser des faserförmigen Verstärkungsmittels im Bereich von 2 : 1 bis 40 : 1 liegt, bevorzugt im Bereich von 3 : 1 bis 30 : 1 und insbesondere bevorzugt im Bereich von 5 : 1 bis 20 : 1, wobei die Länge des faserförmigen Verstärkungsmittels und der Durchmesser des faserförmigen Verstärkungsmittels bestimmt werden durch Mikroskopie mittels Bildauswertung an Proben nach Veraschung, wobei mindestens 70 000 Teile des faserförmigen Verstärkungsmittels nach Veraschung ausgewertet werden.

Die Länge des faserförmigen Verstärkungsmittels liegt dann üblicherweise im Bereich von 5 bis 1000 μm, bevorzugt im Bereich von 10 bis 600 μm und insbesondere bevorzugt im Bereich von 20 bis 500 μm, bestimmt mittels Mikroskopie mit Bildauswertung nach Veraschung.

Der Durchmesser liegt dann beispielsweise im Bereich von 1 bis 30 μm, bevorzugt im Bereich von 2 bis 20 μm und insbesondere bevorzugt im Bereich von 5 bis 15 μm, bestimmt mittels Mikroskopie mit Bildauswertung nach Veraschung.

Das mindestens eine Verstärkungsmittel ist in einer weiteren bevorzugten Ausführungsform plättchenförmig. Unter "plättchenförmig" wird im Rahmen der vorliegenden Erfindung verstanden, dass die Partikel des mindestens einen

Verstärkungsmittels eine Verhältnis von Durchmesser zu Dicke im Bereich von 4 : 1 bis 10 : 1 aufweisen, bestimmt mittels Mikroskopie mit Bildauswertung nach Veraschung.

Geeignete Verstärkungsmittel sind dem Fachmann bekannt und beispielsweise ausgewählt aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Gegenstand der vorliegenden Erfindung ist daher auch ein Verfahren, bei dem die Komponente (E) ausgewählt ist aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Bevorzugt ist das mindestens eine Verstärkungsmittel ausgewählt aus der Gruppe bestehend aus Aluminiumsilikaten, Glasfasern, Glaskugeln, Kieselsäurefasern und Kohlenstofffasern.

Besonders bevorzugt ist das mindestens eine Verstärkungsmittel ausgewählt aus der Gruppe bestehend aus Aluminiumsilikaten, Glasfasern, Glaskugeln und Kohlenstofffasern. Diese Verstärkungsmittel können zudem epoxyfunktionalisiert sein.

Geeignete Kieselsäurefasern sind beispielsweise Wollastonit.

Geeignete Aluminiumsilikate sind dem Fachmann als solche bekannt. Als Aluminiumsilikate werden Verbindungen bezeichnet, die $Al_2O_3$ und $SiO_2$ enthalten. Strukturell ist den Aluminiumsilikaten gemeinsam, dass die Siliziumatome tetraedrisch von Sauerstoffatomen koordiniert sind und die Aluminiumatome oktaedrisch von Sauerstoffatomen koordiniert sind. Aluminiumsilikate können darüber hinaus weitere Elemente enthalten.

Bevorzugt als Aluminiumsilikate sind Schichtsilikate. Besonders bevorzugt als Aluminiumsilikate sind kalzinierte Aluminiumsilikate, insbesondere bevorzugt sind kalzinierte Schichtsilikate. Das Aluminiumsilikat kann zudem epoxyfunktionalisiert sein.

Ist das mindestens eine Verstärkungsmittel ein Aluminiumsilikat, kann das Aluminiumsilikat in beliebiger Form eingesetzt werden. Beispielsweise kann es als reines Aluminiumsilikat eingesetzt werden, ebenso ist es möglich, dass das Aluminiumsilikat als Mineral eingesetzt wird. Bevorzugt wird das Aluminiumsilikat als Mineral eingesetzt. Geeignete Aluminiumsilikate sind beispielsweise Feldspate, Zeolite, Sodalith, Sillimanit, Andalusit und Kaolin. Kaolin ist als Aluminiumsilikat bevorzugt. Kaolin gehört zu den Tongesteinen und enthält im Wesentlichen das Mineral Kaolinit. Die Summenformel von Kaolinit ist $Al_2[(OH)_4/Si_2O_5]$. Kaolinit ist ein Schichtsilikat. Kaolin enthält neben Kaolinit üblicherweise noch weitere Verbindungen wie beispielsweise Titandioxid, Natriumoxide und Eisenoxide. Erfindungsgemäß bevorzugtes Kaolin enthält mindestens 98 Gew.-% Kaolinit, bezogen auf das Gesamtgewicht des Kaolins.

Enthält das Sinterpulver die Komponente (E), so enthält bevorzugt mindestens 10 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Schritt ii)

Ein weiterer Gegenstand der vorliegenden Erfindung ist ein Verfahren zur Herstellung eines Formkörpers umfassend die Schritte:

i) Bereitstellen einer Schicht des Sinterpulvers (SP),

ii) Belichten der in Schritt i) bereitgestellten Schicht des Sinterpulvers (SP).

In Schritt ii) wird die in Schritt i) bereitgestellte Schicht des Sinterpulvers (SP) belichtet.

Beim Belichten schmilzt zumindest ein Teil der Schicht des Sinterpulvers (SP) auf. Das aufgeschmolzene Sinterpulver (SP) fließt ineinander und bildet eine homogene Schmelze. Nach dem Belichten kühlt der aufgeschmolzene Teil der Schicht des Sinterpulvers (SP) wieder ab und die homogene Schmelze erstarrt wieder.

Zur Belichtung eignen sich alle dem Fachmann bekannten Methoden. Bevorzugt erfolgt das Belichten in Schritt ii) mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Gegenstand der vorliegenden Erfindung ist daher auch ein Verfahren, bei dem das Belichten in Schritt ii) mit einer Strahlungsquelle erfolgt, die ausgewählt ist aus der Gruppe bestehend aus Lasern und Infrarotstrahlern.

Geeignete Laser sind dem Fachmann bekannt und beispielsweise Faserlaser, Nd:YAG Laser (Neodym-dotierter Yttrium-Aluminium-Granat-Laser) oder Kohlendioxidlaser. Der Kohlendioxidlaser hat üblicherweise eine Wellenlänge von 10,6 $\mu$m.

Wird als Strahlungsquelle beim Belichten in Schritt ii) ein Laser eingesetzt, so wird üblicherweise die in Schritt i) bereitgestellte Schicht des Sinterpulvers (SP) mit dem Laserstrahl lokal und kurzzeitig belichtet. Dabei werden nur die Teile des Sinterpulvers (SP), die vom Laserstrahl belichtet worden sind, selektiv aufgeschmolzen. Wird in Schritt ii) ein Laser eingesetzt, wird das erfindungsgemäße Verfahren auch als selektives Lasersintern bezeichnet. Das selektive

Lasersintern ist dem Fachmann als solches bekannt.

Wird als Strahlungsquelle beim Belichten in Schritt ii) ein Infrarot-Strahler, insbesondere ein Nahinfrarot-Strahler eingesetzt, so liegt die Wellenlänge, mit der die Strahlungsquelle strahlt, üblicherweise im Bereich von 780 nm bis 1000 μm, bevorzugt im Bereich von 780 nm bis 50 μm und insbesondere im Bereich von 780 nm bis 2,5 μm.

Beim Belichten in Schritt ii) wird dann üblicherweise die gesamte Schicht des Sinterpulvers (SP) belichtet. Damit beim Belichten nur die gewünschten Bereiche des Sinterpulvers (SP) aufschmelzen, wird üblicherweise eine Infrarot-absorbierende Tinte (IR-absorbierende Tinte) auf die Bereiche aufgebracht, die aufschmelzen sollen.

Das Verfahren zur Herstellung des Formkörpers umfasst dann bevorzugt zwischen Schritt i) und Schritt ii) einen Schritt i-1), Aufbringen mindestens einer IR-absorbierenden Tinte, auf zumindest einen Teil der in Schritt i) bereitgestellten Schicht des Sinterpulvers (SP).

Ein weiterer Gegenstand der vorliegenden Erfindung ist daher auch ein Verfahren zur Herstellung eines Formkörpers, umfassend die Schritte

i) Bereitstellen einer Schicht eines Sinterpulvers (SP), das die Komponenten

(A) mindestens einen teilkristallinen Terephthalat-Polyester,
(B) mindestens einen amorphen Terephthalat-Polyester,
(C) mindestens ein Phoshinsäuresalz der allgemeinen Formel (I),
(D) gegebenenfalls mindestens ein Additiv und
(E) gegebenenfalls mindestens ein Verstärkungsmittel

enthält,

i-1) Aufbringen mindestens einer IR-absorbierenden Tinte auf zumindest einen Teil der in Schritt i) bereitgestellten Schicht des Sinterpulvers (SP)

ii) Belichten der in Schritt i) bereitgestellten Schicht des Sinterpulvers (SP).

Als IR-absorbierende Tinten eignen sich alle dem Fachmann bekannten IR-absorbierenden Tinten, insbesondere dem Fachmann bekannte IR-absorbierende Tinte für das High Speed Sintern.

IR-absorbierende Tinten enthalten üblicherweise zumindest einen Absorber, der IR-Strahlung, bevorzugt NIR-Strahlung (Nahinfrarot Strahlung) absorbiert. Beim Belichten der Schicht des Sinterpulvers (SP) in Schritt ii) wird durch die Absorption der IR-Strahlung, bevorzugt der NIR-Strahlung, durch den in der IR-absorbierenden Tinten enthaltenen IR-Absorber der Teil der Schicht des Sinterpulvers (SP), auf den die IR-absorbierende Tinte aufgebracht worden ist, selektiv erwärmt.

Die IR-absorbierende Tinte kann neben dem zumindest einen Absorber eine Trägerflüssigkeit enthalten. Geeignete Trägerflüssigkeiten sind dem Fachmann bekannt und beispielsweise Öle oder Lösungsmittel.

Der zumindest eine Absorber eine Absorber kann in der Trägerflüssigkeit gelöst oder dispergiert vorliegen.

Erfolgt die Belichtung in Schritt ii) mit einer Strahlungsquelle, die ausgewählt ist aus Infrarot-Strahlern und wird Schritt i-1) durchgeführt, dann wird das erfindungsgemäße Verfahren auch als *High-Speed Sintering (HSS)* oder *Multijet-Fusion-Verfahren (MJF)* bezeichnet. Diese Verfahren sind dem Fachmann als solche bekannt.

Im Anschluss an den Schritt ii) wird die Schicht des Sinterpulvers (SP) üblicherweise um die Schichtdicke der in Schritt i) bereitgestellten Schicht des Sinterpulvers (SP) abgesenkt und eine weitere Schicht des Sinterpulvers (SP) aufgebracht. Diese wird anschließend gemäß Schritt ii) erneut belichtet.

Dadurch verbindet sich zum einen die obere Schicht des Sinterpulvers (SP) mit der unteren Schicht des Sinterpulvers (SP), außerdem verbinden sich die Partikel des Sinterpulvers (SP) innerhalb der oberen Schicht durch Aufschmelzen miteinander.

Im erfindungsgemäßen Verfahren können die Schritte i) und ii) sowie gegebenenfalls i1) also wiederholt werden.

Indem das Absenken des Pulverbetts, das Aufbringen des Sinterpulvers (SP) und das Belichten und damit das Aufschmelzen des Sinterpulvers (SP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Sinterpulver (SP) selbst als Stützmaterial fungiert.

Ein weiterer Gegenstand der vorliegenden Erfindung ist daher auch ein Formkörper erhältlich nach dem erfindungsgemäßen Verfahren.

Bei dem erfindungsgemäßen Verfahren von besonderer Bedeutung ist der Schmelzbereich des Sinterpulvers (SP), das sogenannte Sinterfenster ($W_{SP}$) des Sinterpulvers (SP).

Das Sinterfenster ($W_{SP}$) des Sinterpulvers (SP) kann beispielsweise durch dynamische Differenzkalorimetrie (DDK; Differential Scanning Calorimetry, DSC) bestimmt werden.

Bei der dynamischen Differenzkalorimetrie werden die Temperatur einer Probe, im vorliegenden Fall also einer Probe des Sinterpulvers (SP), und die Temperatur einer Referenz linear mit der Zeit geändert. Dazu wird der Probe und der Referenz Wärme zugeführt bzw. aus diesen abgeführt. Es wird die Wärmemenge Q bestimmt, die notwendig ist, um die Probe auf der gleichen Temperatur wie die Referenz zu halten. Als Referenzwert dient die der Referenz zugeführte bzw. abgeführte Wärmemenge QR.

Geht die Probe eine endotherme Phasenumwandlung ein, so muss eine zusätzliche Wärmemenge Q zugeführt werden, um die Probe auf der gleichen Temperatur wie die Referenz zu halten. Findet eine exotherme Phasenumwandlung statt, so muss eine Wärmemenge Q abgeführt werden, um die Probe auf der gleichen Temperatur wie die Referenz zu halten. Die Messung liefert ein DSC-Diagramm, in dem die Wärmemenge Q, die der Probe zugeführt bzw. aus dieser abgeführt wird, in Abhängigkeit von der Temperatur T aufgetragen wird.

Üblicherweise wird bei der Messung zunächst ein Heizlauf (H) durchgeführt, das heißt, die Probe und die Referenz werden linear erwärmt. Während des Schmelzens der Probe (Phasenumwandlung fest/flüssig), muss eine zusätzliche Wärmemenge Q zugeführt werden, um die Probe auf der gleichen Temperatur wie die Referenz zu halten. Im DSC-Diagramm wird dann ein Peak beobachtet, der sogenannte Aufschmelzpeak.

Im Anschluss an den Heizlauf (H) wird üblicherweise ein Kühllauf (K) gemessen. Dabei werden die Probe und die Referenz linear abgekühlt, es wird also Wärme aus der Probe und der Referenz abgeführt. Während der Kristallisation bzw. Erstarrung der Probe (Phasenumwandlung flüssig/fest) muss eine größere Wärmemenge Q abgeführt werden, um die Probe auf der gleichen Temperatur wie die Referenz zu halten, da bei der Kristallisation bzw. dem Erstarren Wärme frei wird. In dem DSC Diagramm des Kühllaufs (K) wird dann ein Peak, der sogenannte Kristallisationspeak, in entgegengesetzter Richtung zu dem Aufschmelzpeak beobachtet.

Im Rahmen der vorliegenden Erfindung erfolgt das Erwärmen während des Heizlaufs üblicherweise mit einer Heizrate von 20 K/min. Das Abkühlen während des Kühllaufs erfolgt im Rahmen der vorliegenden Erfindung üblicherweise mit einer Kühlrate von 20 K/min.

Ein DSC-Diagramm mit einem Heizlauf (H) und einem Kühllauf (K) ist exemplarisch in Figur 1 dargestellt. Anhand des DSC-Diagramms können die Onset Temperatur des Aufschmelzens ($T_M^{onset}$) und die Onset-Temperatur der Kristallisation ($T_C^{onset}$) bestimmt werden.

Zur Bestimmung der Onset-Temperatur des Aufschmelzens ($T_M^{onset}$) wird eine Tangente an die Basislinie des Heizlaufs (H), die bei den Temperaturen unterhalb des Aufschmelzpeaks verläuft, angelegt. Eine zweite Tangente wird an den ersten Wendepunkt des Aufschmelzpeaks angelegt, der bei Temperaturen unterhalb der Temperatur am Maximum des Aufschmelzpeaks liegt. Die beiden Tangenten werden so weit extrapoliert, dass sie sich schneiden. Die senkrechte Extrapolation des Schnittpunkts auf die Temperaturachse gibt die Onset-Temperatur des Aufschmelzens ($T_M^{onset}$)an.

Zur Bestimmung der Onset-Temperatur der Kristallisation ($T_C^{onset}$) wird eine Tangente an die Basislinie des Kühllaufs (K), die bei den Temperaturen oberhalb des Kristallisationspeaks verläuft, angelegt. Eine zweite Tangente wird an den Wendepunkt des Kristallisationspeaks angelegt, der bei Temperaturen oberhalb der Temperatur am Minimum des Kristallisationspeaks liegt. Die beiden Tangenten werden so weit extrapoliert, dass sie sich schneiden. Die senkrechte Extrapolation des Schnittpunkts auf die Temperaturachse gibt die Onset-Temperatur der Kristallisation ($T_C^{onset}$) an.

Das Sinterfenster (W) ergibt sich aus der Differenz zwischen der Onset-Temperatur des Aufschmelzens ($T_M^{onset}$)und der Onset-Temperatur der Kristallisation ($T_C^{onset}$). Es gilt also:

$$W = T_M^{onset} - T_C^{onset} .$$

Im Rahmen der vorliegenden Erfindung haben die Begriffe "Sinterfenster ($W_{SP}$)", "Größe des Sinterfensters (WSP)" und "Differenz zwischen der Onset-Temperatur des Aufschmelzens ($T_M^{onset}$) und der Onset-Temperatur der Kristallisation ($T_C^{onset}$)" die gleiche Bedeutung und werden synonym gebraucht.

Das erfindungsgemäße Sinterpulver (SP) eignet sich besonders gut zur Verwendung in einem Sinterverfahren.

Gegenstand der vorliegenden Erfindung ist daher auch die Verwendung eines Sinterpulvers (SP), das die Komponenten

(A) mindestens einen teilkristallinen Terephthalat-Polyester,
(B) mindestens einen amorphen Terephthalat-Polyester,
(C) mindestens ein Phoshinsäuresalz der allgemeinen Formel (I),
(D) gegebenenfalls mindestens ein Additiv und
(E) gegebenenfalls mindestens ein Verstärkungsmittel

enthält, in einem Sinterverfahren oder in einem Fused Filament Fabrication-Verfahren. Bevorzugt ist die Verwendung des Sinterpulvers (SP) in einem Sinterverfahren.

Formkörper

Durch das erfindungsgemäße Verfahren wird ein Formkörper erhalten. Der Formkörper kann direkt nach dem Erstarren des beim Belichten in Schritt ii) aufgeschmolzenen Sinterpulvers (SP) aus dem Pulverbett entnommen werden. Ebenso ist es möglich, den Formkörper erst abzukühlen und dann erst aus dem Pulverbett zu entnehmen. Gegebenenfalls anhaftende Partikel des Sinterpulvers, die nicht aufgeschmolzen worden sind, können mechanisch nach bekannten Verfahren von der Oberfläche entfernt werden. Verfahren zur Oberflächenbehandlung des Formkörpers umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln.

Ein weiterer Gegenstand der vorliegenden Erfindung ist daher ein Formkörper, erhältlich nach dem erfindungsgemäßen Verfahren.

Die erhaltenen Formkörper enthalten üblicherweise im Bereich von 50 bis 90 Gew.-% der Komponente (A), im Bereich von 5 bis 25 Gew.-% der Komponente (B), im Bereich von 5 bis 25 Gew.-% der Komponente (C), im Bereich von 0 bis 10 Gew.-% der Komponente (D) und im Bereich von 0 bis 40 Gew.-% der Komponente (E), jeweils bezogen auf das Gesamtgewicht des Formkörpers.

Bevorzugt enthält der Formkörper im Bereich von 55 bis 83,9 Gew.-% der Komponente (A), im Bereich von 8 bis 23 Gew.-% der Komponente (B), im Bereich von 8 bis 23 Gew.-% der Komponente (C), im Bereich von 0,1 bis 2,5 Gew.-% der Komponente (D) und im Bereich von 0 bis 28,9 Gew.-% der Komponente (E), jeweils bezogen auf das Gesamtgewicht des Formkörpers.

Am meisten bevorzugt enthält der Formkörper im Bereich von 60 bis 79,9 Gew.-% der Komponente (A), im Bereich von 10 bis 20 Gew.-% der Komponente (B), im Bereich von 10 bis 20 Gew.-% der Komponente (C), im Bereich von 0,1 bis 2 Gew.-% der Komponente (D) und im Bereich von 0 bis 19,9 Gew.-% der Komponente (E), jeweils bezogen auf das Gesamtgewicht des Formkörpers.

Im Allgemeinen handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, bei der Komponente (C) um die Komponente (C), die im Sinterpulver (SP) enthalten war, bei der Komponente (D) um die Komponente (D), die im Sinterpulver (SP) enthalten war und bei der Komponente (E) um die Komponente (E), die im Sinterpulver (SP) enthalten war.

Wenn Schritt i-1) durchgeführt worden ist, enthält der Formkörper zudem üblicherweise die IR-absorbierende Tinte.

Dem Fachmann ist klar, dass durch die Belichtung des Sinterpulvers (SP) die Komponenten (A), (B) und (C) sowie gegebenenfalls (D) und (E) chemische Reaktionen eingehen können und sich dadurch verändern können. Derartige Reaktionen sind dem Fachmann bekannt.

Bevorzugt gehen die Komponenten (A), (B) und (C) sowie gegebenenfalls (D) und (E) beim Belichten in Schritt ii) keine chemische Reaktion ein, sondern das Sinterpulver (SP) schmilzt lediglich auf.

Nachfolgend wird die Erfindung anhand von Beispielen näher erläutert, ohne sie hierauf zu beschränken.

Beispiele

Es werden die folgenden Komponenten eingesetzt:

Komponente (A): teilkristalliner Terephtalat-Polyester; Ultradur ® B4500, BASF SE (Polybutylenterephthalat)

Komponente (B): amorpher Terephthalat-Polyester; Genius 72, Selenis, (ein Glykolmodifiziertes Polyethylenterephthalat)

Komponente (B1): amorphes Polycarbonat; Makrolon 2805, Covestro (Polycarbonat)

Komponente (C): Phospinsäuresalz; Exolit OP935, Clariant (Aluminiumdiethylphoshinat)

Komponente (D): Antioxidationsmittel; Irganox® 245, BASF SE (sterisch gehindertes Phenol)

Messmethoden:
Die Verfärbung nach der Lagerung wird bestimmt durch optische Bewertung nach einem Notensystem 1 (am besten) und 5 (am schlechtesten).

Die Nullscherviskosität $\eta_0$ (zero shear rate viscosity) wurde bestimmt mit einem Rotationsviskosimeter "DHR-1" der Firma TA Instruments und einer Platte-Platte-Geometrie mit einem Durchmesser von 25 mm und einem Spaltabstand von 1 mm. Es wurden ungetemperte Proben für 7 Tage bei 80 °C unter Vakuum getrocknet und diese dann mit zeitabhängigem Frequenzsweep mit einem Kreisfrequenzbereich von 500 bis 0,5 rad/s gemessen. Es wurden folgende weitere Messparameter verwendet:

Deformation: 1,0 %,
Messtemperatur: 240 °C,
Messzeit: 20 min,
Vorheizzeit nach Probenpräparation: 1,5 min.

Zur Bestimmung der thermooxidativen Stabilität der Sinterpulver wurde die komplexe Scherviskosität von frisch hergestellten Sinterpulvern sowie von Sinterpulvern nach Ofenlagerung bei 0,5 % Sauerstoff für 16 Stunden und 195 °C bestimmt. Es wurde das Verhältnis der Viskosität nach Lagerung (nach Alterung) zur Viskosität vor Lagerung (vor Alterung) bestimmt. Die Viskositätsmessung erfolgt mittels Rotationsrheologie bei einer Messfrequenz von 0,5 rad/s bei einer Temperatur von 240 °C.

Die vorstehend genannten Komponenten wurden in den in Tabelle 1 angegebenen Mengen in einen Extruder compoundiert und nachfolgend in einer Stiftmühle auf eine Partikelgröße (D50-Wert) im Bereich kleiner 200 μm vermahlen. Die physikalischen Eigenschaften sind in Tabelle 2 wiedergegeben.

Tabelle 1

| Beispiel / Vergleichsbeispiel | Komponente A (Gew.%) | Komponente B (Gew.%) | Komponente C | Komponente B1 | Komponente D (Gew.%) |
|---|---|---|---|---|---|
| VB 1 | 99,75 | 0 | - | - | 0,25 |
| VB 2 | 89,75 | 10 | - | - | 0,25 |
| VB 3 | 87,75 | 0 | 12 | - | 0,25 |
| B 4 | 77,75 | 10 | 12 | - | 0,25 |
| B 5 | 72,75 | 15 | 12 | - | 0,25 |
| B 6 | 67,75 | 20 | 12 | - | 0,25 |
| VB 7 | 77,75 | - | 12 | 10 | 0,25 |
| VB 8 | 89,75 | - | - | 10 | 0,25 |

Tabelle 2

| Beispiel | Komplexe Scherviskosität bei 0.5 rad/s, 240 °C Pas) | Viskositätsverhältnis nach thermo-oxidativer Lagerung (16 h, 195 °C, 0,5 % $O_2$) | Tm1, °C | Tk1, °C | Sinter-fenster (onset) W, K | Verfärbung nach Lagerung |
|---|---|---|---|---|---|---|
| VB 1 | 582 | 7,0 | 222,4 | 196,3 | 18,1 | 1 |
| VB 2 | 597 | 2,6 | 221,5 | 190,1 | 19,3 | 2 |
| VB 3 | 1 010 | 5,9 | 221,8 | 194,0 | 19,2 | 3 |
| B 4 | 962 | 3,4 | 221,4 | 187,9 | 24,0 | 2 |
| B 5 | 800 | 3,0 | 221,1 | 183,0 | 26,9 | 2 |
| B 6 | 1 000 | 3,5 | 221,5 | 180,1 | 30,3 | 2 |
| VB 7 | 2 430 | 0,2 | 220,5 | 188,3 | 21,8 | 4 |
| VB 8 | 691 | 3,1 | 221,5 | 188,3 | 22,7 | 3 |

Skala für Verfärbung nach thermo-oxidativer Lagerung:

1 - sehr gering;
2 - gering;
3 - mittel;
4 - ausreichend
5 - mangelhaft

Die erfindungsgemäßen Sinterpulver (SP) haben ein verbreitertes Sinterfenster und zeigen darüber hinaus auch nach Lagerung gute Farbwerte. Darüber hinaus weisen Die nach dem durch das erfindungsgemäße Verfahren hergestellte Formkörper (Bauteile) eine gute Flammschutzwirkung auf. Die erfindungsgemäßen Sinterpulver (SP) weisen darüber hinaus eine verbesserte Lagerstabilität auf.

**Patentansprüche**

**1.** Sinterpulver (SP) enthaltend die Komponenten

(A) mindestens einen teilkristallinen Terephthalat-Polyester,
(B) mindestens einen amorphen Terephthalat-Polyester,
(C) mindestens ein Phosphinsäuresalz der allgemeinen Formel (I)

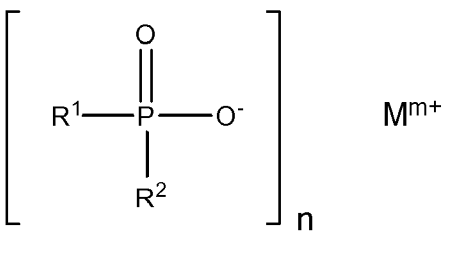

( I )

,

in der $R^1$ und $R^2$ unabhängig voneinander Wasserstoff oder $C_1$-$C_8$-Alkyl sind;

M $(C_1\text{-}C_4\text{-Alkyl})_4N$, $(C_1\text{-}C_4\text{-Alkyl})_3NH$, $(C_2\text{-}C_4\text{-AlkylOH})_4N$, $(C_2\text{-}C_4\text{AlkylOH})_3NH$, $(C_2\text{-}C_4\text{-AlkylOH})_2N(CH_3)_2$, $(C_2\text{-}C_4\text{-AlkylOH})_2NHCH_3$, $(C_6H_5)_4N$, $(C_6H_5)NH$, $(C_6H_4CH_3)_4N$, $(C_6H_4CH_3)_3NH$, $NH_4$, ein Alkalimetallion, ein Erdalkalimetallion, ein Aluminiumion, ein Zinkion, ein Eisenion oder ein Borion ist;
m 1, 2 oder 3 ist und die Anzahl der positiven Ladungen von M angibt; und
n 1, 2, oder 3 ist und die Anzahl der Phosphinsäureanionen angibt.

2. Sinterpulver (SP) gemäß Anspruch 1, **dadurch gekennzeichnet, dass** es im Bereich von 50 bis 90 Gew.-% der Komponente (A), im Bereich von 5 bis 25 Gew.-% der Komponente (B) und im Bereich von 5 bis 25 Gew.-% der Komponente (C) enthält, jeweils bezogen auf die Summe der Gewichtprozente (A), (B) und (C).

3. Sinterpulver (SP) gemäß Anspruch 1 oder 2, **dadurch gekennzeichnet, dass** der mindestens eine teilkristalline Terephthalat-Polyester (Komponente A) ausgewählt ist aus der Gruppe bestehend aus Polyethylenterephthalat (PET) und Polybutylenterephthalat (PBT).

4. Sinterpulver (SP) gemäß einem der Ansprüche 1 bis 3, **dadurch gekennzeichnet, dass** die Komponente (C) ein Phosphinsäuresalz der Formel (I')

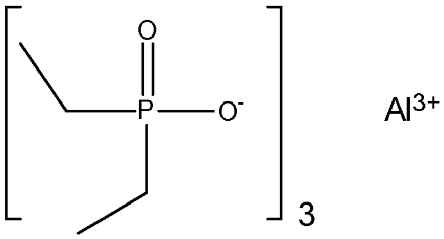

( I' )

ist.

5. Sinterpulver (SP) gemäß einem der Ansprüche 1 bis 4, **dadurch gekennzeichnet, dass** der mindestens eine amorphe Terephthalat-Polyester (Komponente B) ein amorpher Polyethylenterephthalatester ist.

6. Sinterpulver (SP) gemäß einem der Ansprüche 1 bis 5, **dadurch gekennzeichnet, dass** das Sinterpulver eine mittlere Partikelgröße (D50-Wert) im Bereich von 10 bis 250 µm aufweist.

7. Sinterpulver (SP) gemäß einem der Ansprüche 1 bis 6, **dadurch gekennzeichnet, dass** das Sinterpulver (SP)
einen D10-Wert im Bereich von 10 bis 60 µm,
einen D50-Wert im Bereich von 25 bis 90 µm und
einen D90-Wert im Bereich von 50 bis 150 µm
aufweist.

8. Sinterpulver (SP) gemäß einem der Ansprüche 1 bis 7, **dadurch gekennzeichnet, dass** das Sinterpulver (SP) eine Schmelztemperatur ($T_M$) im Bereich von 150 bis 260°C aufweist.

9. Sinterpulver (SP) gemäß einem der Ansprüche 1 bis 8, **dadurch gekennzeichnet, dass** das Sinterpulver (SP) eine Kristallisationstemperatur ($T_C$) im Bereich von 110 bis 210°C aufweist.

10. Sinterpulver (SP) gemäß einem der Ansprüche 1 bis 9, **dadurch gekennzeichnet, dass** das Sinterpulver (SP) ein Sinterfenster ($W_{SP}$) aufweist, wobei das Sinterfenster ($W_{SP}$) die Differenz zwischen der Onset-Temperatur des Aufschmelzens ($T_M^{onset}$) und der Onset-Temperatur der Kristallisation ($T_C^{onset}$) ist und wobei das Sinterfenster ($W_{SP}$) im Bereich von 10 bis 40 K liegt.

11. Verfahren zur Herstellung eines Sinterpulvers (SP) umfassend die Schritte

a) Mischen der Komponenten

(A) mindestens ein teilkristalliner Terephthalat-Polyester,
(B) mindestens ein amorpher Terephthalat-Polyester,
(C) mindestens ein Phosphinsäuresalz der allgemeinen Formel (I)

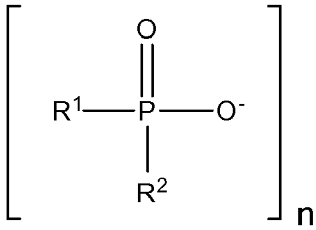 $M^{m+}$ (I)

,

in der $R^1$ und $R^2$ unabhängig voneinander Wasserstoff oder $C_1$-$C_8$-Alkyl sind;
M $(C_1$-$C_4$-Alkyl$)_4N$, $(C_1$-$C_4$-Alkyl$)_3NH$, $(C_2$-$C_4$-AlkylOH$)_4N$, $(C_2$-$C_4$AlkylOH$)_3NH$, $(C_2$-$C_4$-AlkylOH$)_2N(CH_3)_2$, $(C_2$-$C_4$-AlkylOH$)_2NHCH_3$, $(C_6H_5)_4N$, $(C_6H_5)NH$, $(C_6H_4CH_3)_4N$, $(C_6H_4CH_3)_3NH$, $NH_4$, ein Alkalimetallion, ein Erdalkalimetallion, ein Aluminiumion, ein Zinkion, ein Eisenion oder ein Borion ist;
m 1, 2 oder 3 ist und die Anzahl der positiven Ladungen von M angibt; und
n 1, 2, oder 3 ist und die Anzahl der Phosphinsäureanionen angibt; und

b) Mahlen der in Schritt a) erhaltenen Mischung unter Erhalt des Sinterpulvers (SP).

**12.** Verfahren zur Herstellung eines Formkörpers umfassend die Schritte:

i) Bereitstellen einer Schicht eines Sinterpulvers (SP) gemäß einem der Ansprüche 1 bis 10,
ii) Belichten der in Schritt i) bereitgestellten Schicht des Sinterpulvers (SP).

**13.** Verwendung eines Sinterpulvers (SP) gemäß einem der Ansprüche 1 bis 10 in einem Sinterverfahren oder in einem Fused Filament Fabrication-Verfahren.

**14.** Formkörper erhältlich durch ein Verfahren gemäß Anspruch 12.

**15.** Verwendung eines Phosphinsäuresalzes der allgemeinen Formel (I)

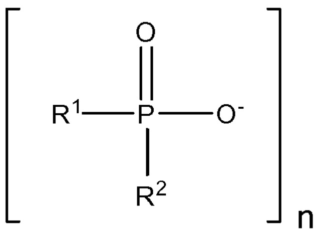 $M^{m+}$ (I)

,

in der $R^1$ und $R^2$ unabhängig voneinander Wasserstoff oder $C_1$-$C_8$-Alkyl sind;
M $(C_1$-$C_4$-Alkyl$)_4N$, $(C_1$-$C_4$-Alkyl$)_3NH$, $(C_2$-$C_4$-AlkylOH$)_4N$, $(C_2$-$C_4$AlkylOH$)_3NH$, $(C_2$-$C_4$-AlkylOH$)_2N(CH_3)_2$, $(C_2$-$C_4$-AlkylOH$)_2NHCH_3$, $(C_6H_5)_4N$, $(C_6H_5)NH$, $(C_6H_4CH_3)_4N$, $(C_6H_4CH_3)_3NH$, $NH_4$, ein Alkalimetallion, ein Erdalkalimetallion, ein Aluminiumion, ein Zinkion, ein Eisenion oder ein Borion ist;
m 1, 2 oder 3 ist und die Anzahl der positiven Ladungen von M angibt; und
n 1, 2, oder 3 ist und die Anzahl der Phosphinsäureanionen angibt,
zur Verbreiterung des Sinterfensters ($W_{SP}$) eines Sinterpulvers (SP).

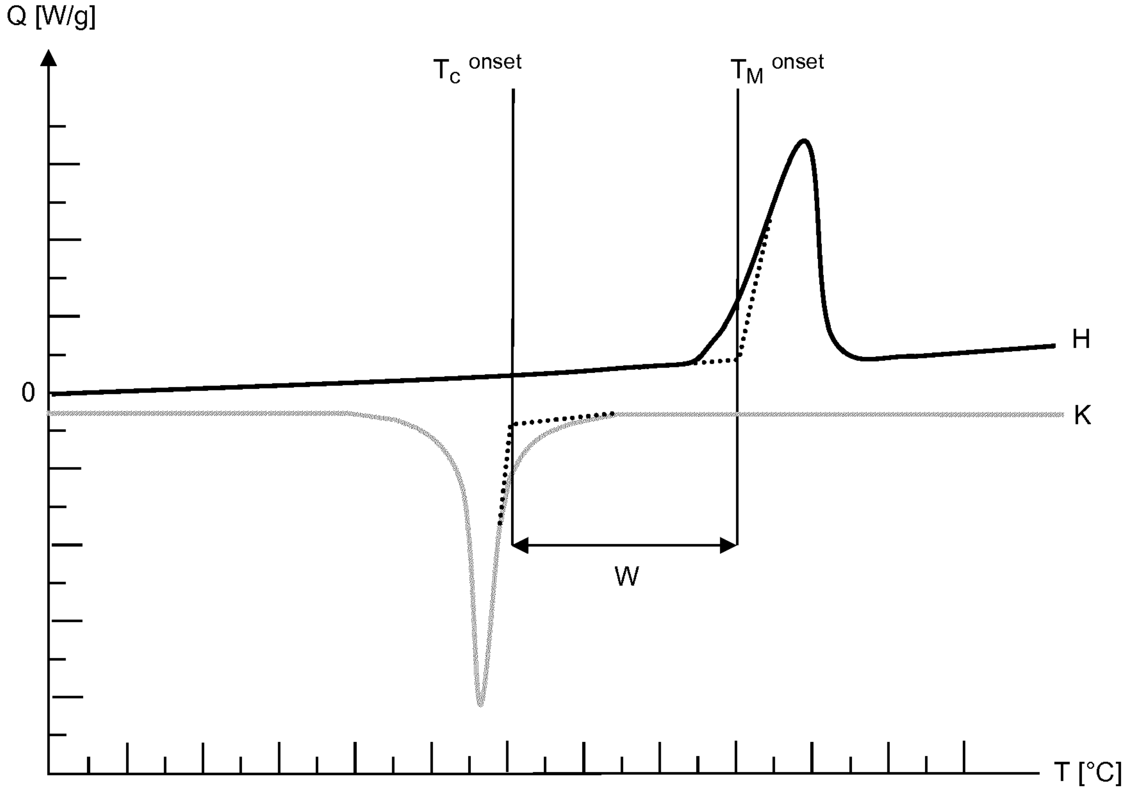


Fig. 1

Europäisches Patentamt
European Patent Office
Office européen des brevets

# EUROPÄISCHER RECHERCHENBERICHT

Nummer der Anmeldung
EP 18 19 1799

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | WO 2017/063841 A1 (BASF SE [DE])<br>20. April 2017 (2017-04-20)<br>* Beispiele V3, E1-E3 *<br>----- | 14<br>1-13,15 | INV.<br>C08L67/02<br>B29C64/00 |
| Y | ZAHIR BASHIR ET AL: "Evaluation of poly(ethylene terephthalate) powder as a material for selective laser sintering, and characterization of printed part", POLYMER ENGINEERING AND SCIENCE., Bd. 58, Nr. 10, 12. Februar 2017 (2017-02-12), - 31. Oktober 2018 (2018-10-31), Seiten 1888-1900, XP055551143, US<br>ISSN: 0032-3888, DOI: 10.1002/pen.24797<br>* Seite 1888 - Seite 1900 *<br>----- | 1-13,15 | |
| A | Clariant Clariant: "EXOLIT FLAME RETARDANTS FOR THERMOPLASTICS",<br>,<br>31. Dezember 2013 (2013-12-31), XP055551436,<br>Gefunden im Internet:<br>URL:https://www.clariant.com/de/Solutions/Products/2014/03/18/16/31/EXOLIT-OP-935#<br>[gefunden am 2019-02-04]<br>* Seiten 14-16 *<br>----- | 1-15 | RECHERCHIERTE SACHGEBIETE (IPC)<br>C08L<br>B29C |

Der vorliegende Recherchenbericht wurde für alle Patentansprüche erstellt

2

| Recherchenort | Abschlußdatum der Recherche | Prüfer |
|---|---|---|
| Den Haag | 4. Februar 2019 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 19 1799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2019

| Im Recherchenbericht angeführtes Patentdokument | Datum der Veröffentlichung | Mitglied(er) der Patentfamilie | Datum der Veröffentlichung |
|---|---|---|---|
| WO 2017063841 A1 | 20-04-2017 | BR 112018007470 A2 | 23-10-2018 |
| | | CN 108368327 A | 03-08-2018 |
| | | EP 3362516 A1 | 22-08-2018 |
| | | JP 2018530657 A | 18-10-2018 |
| | | KR 20180067645 A | 20-06-2018 |
| | | US 2018298189 A1 | 18-10-2018 |
| | | WO 2017063841 A1 | 20-04-2017 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6136948 A
- WO 9606881 A
- US 2010160547 A